# EUROPEAN PATENT SPECIFICATION

(11) **EP 2 824 491 B1**
(45) Date of publication and mention of the grant of the patent: **22.01.2020**
(21) Application number: 14176304.5
(22) Date of filing: 09.07.2014
(51) Int. Cl.: G02B 6/38

(54) **Optical connector**
Optischer Verbinder
Connecteur optique

(30) Priority: 12.07.2013 JP 2013146193
(43) Date of publication of application: 14.01.2015
(73) Proprietor: Yazaki Corporation, Tokyo 108-0073 (JP)
(72) Inventor: Hikosaka, Tomohiro, Shizuoka, 410-1107 (JP)
(74) Representative: Hoffmann Eitle

(56) References cited:
- EP-A1- 0 032 722
- WO-A2-2013/019622
- DE-A1- 4 221 040
- JP-A- 2010 096 903
- US-A- 5 097 524
- US-A- 5 231 684
- US-A1- 2012 224 809
- US-A1- 2013 177 280

## Description

### TECHNICAL FIELD

The present invention relates to an optical connector.

### BACKGROUND ART

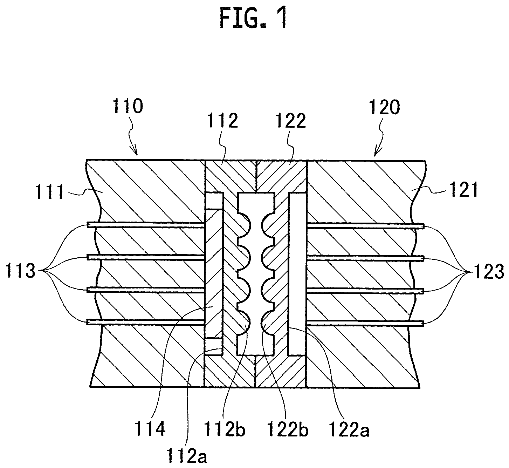

There is an optical connector device that performs optical connection by collimated light. Patent Literature 1 discloses this kind of optical connector device. The conventional optical connector device includes, as shown in FIG. 1, a first optical connector 110 and a second optical connector 120. The first optical connector 110 includes a fiber array 111 having a plurality of fiber core-wire insertion holes (no particular reference numeral is denoted thereto) arranged with intervals therebetween, and a lens array 112 made of a light transmitting material having a depression 112a on an aperture plane side of the fiber core-wire insertion holes and formed with lens portions 112b on an external surface side corresponding to the fiber core-wire insertion holes. An optical fiber core wire 113 is inserted into each of the fiber core-wire insertion holes of the fiber array 111. Forefronts of the respective optical fiber core wires 113 are arranged flush with a front end face of the fiber array 111. A refractive-index matching plate 114 is placed in the depression 112a of the lens array 112.

The second optical connector 120 includes a fiber array 121 having the same configuration as that of the fiber array 111 in which a plurality of optical fibers 123 are aligned and arranged, and a lens array 122 having a depression 122a and a plurality of lens portions 122b formed therein as in the first optical connector 110. However, different from the first optical connector, the second optical connector 120 does not have the refractive-index matching plate. In a state with the first optical connector 110 and the second optical connector 120 being fitted to each other, the respective lens portions 112b and 122b are arranged opposite to each other.

In the first optical connector 110, small-diameter coherent light can be obtained by the refractive-index matching plate 114, and in the second optical connector 120, large-diameter coherent light can be obtained. With such a configuration, even if there is axial misalignment, angular misalignment, or the like between the optical fiber core wires 113 and 123, stable optical communication can be performed.

In the first optical connector 110, because the refractive-index matching plate 114 having an optical-beam diffusion preventing function is put between the front end face of the optical fiber core wire 113 and the surface of the lens array 112 opposite thereto, a scattering loss due to surface roughness of the respective end faces of the optical fiber core wire 113 and the lens array 112 can be reduced, and a Fresnel loss (Fresnel reflection loss) can be reduced as compared with a case in which air is present between the end face of the optical fiber core wire 113 and the end face of the lens array 112. That is, an optical coupling loss can be reduced by the configuration.

### CITATION LIST

### PATENT LITERATURE

Patent Literature 1: Japanese Patent Application Laid-open No. H5-72444 WO-A2-2013/019622 discloses an optical connector according to the state of the art. Further devices are known from EP-A1-0 032 722; US 5,097,524; US-A1-2012/224809; US 5,231,684; US-A1-2013/177280; JP 2010 096903 A; DE 42 21 040 A1.

### DISCLOSURE OF INVENTION

### PROBLEM TO BE SOLVED BY THE INVENTION

However, in the first optical connector 110 in the conventional example described in Patent Literature 1, the refractive-index matching plate 114 needs to be arranged between the end face of the optical fiber core wire 113 and the lens array 112 being a lens member. Accordingly, an installation work becomes complicated, thereby causing cost increase.

The present invention has been achieved in order to solve the above problems, and an object of the present invention is to provide an optical connector that can reduce an optical coupling loss between an end face of an optical fiber core wire and a lens member, can simplify an installation work, and can achieve cost reduction.

### MEANS FOR SOLVING PROBLEM

The present invention provides an optical connector as recited in claim 1.

It is preferable that the adhesive (10) has a refractive index N of N=√(N1+N2) and has an optical transmittance of 90% or higher in a cured state (in a hardened state).

It is also possible that the optical-fiber core-wire holding member 7 is an inner ferrule having the fiber core-wire insertion hole 73.

### EFFECT OF THE INVENTION

According to the present invention, the scattering loss due to surface roughness of the respective end faces of the optical fiber core wire and the lens member can be reduced by the adhesive, and the Fresnel loss (Fresnel reflection loss) can be also reduced as compared with a case in which air is present between the end face of the optical fiber core wire 3a and the end face of the lens member 8. That is, because the adhesive 10 that fixes between the optical-fiber core-wire holding member 7 and the lens member 8 works as a substitute of an optical coupling-loss reducing unit, the optical coupling-loss reducing unit need not be installed separately. Further, the adhesive 10 is cheaper than the refractive-index matching plate. Accordingly, the optical coupling loss between the end face of the optical fiber core wire 3a and the lens member 8 can be reduced, and the installation work can be simplified, and cost reduction can be achieved.

### BRIEF DESCRIPTION OF THE DRAWINGS

FIG. 1 is a sectional view of relevant parts of an optical connector device to which an optical connector according to a conventional example is applied;
FIG. 2 shows an embodiment of the present invention and is an exploded perspective view of an optical connector;
FIGS. 3(a) and 3(b) show the embodiment of the present invention, where FIG. 3(a) is a sectional view of a ferrule and FIG. 3(b) is an enlarged view of a part A in FIG. 3(a);
FIG. 4 shows the embodiment of the present invention and is a sectional view showing an assembling process of the ferrule; and
FIG. 5 shows the embodiment of the present invention and is a sectional view showing an assembling process of the ferrule.

### EMBODIMENT FOR CARRYING OUT THE INVENTION

An embodiment of the present invention is explained below with reference to the accompanying drawings.

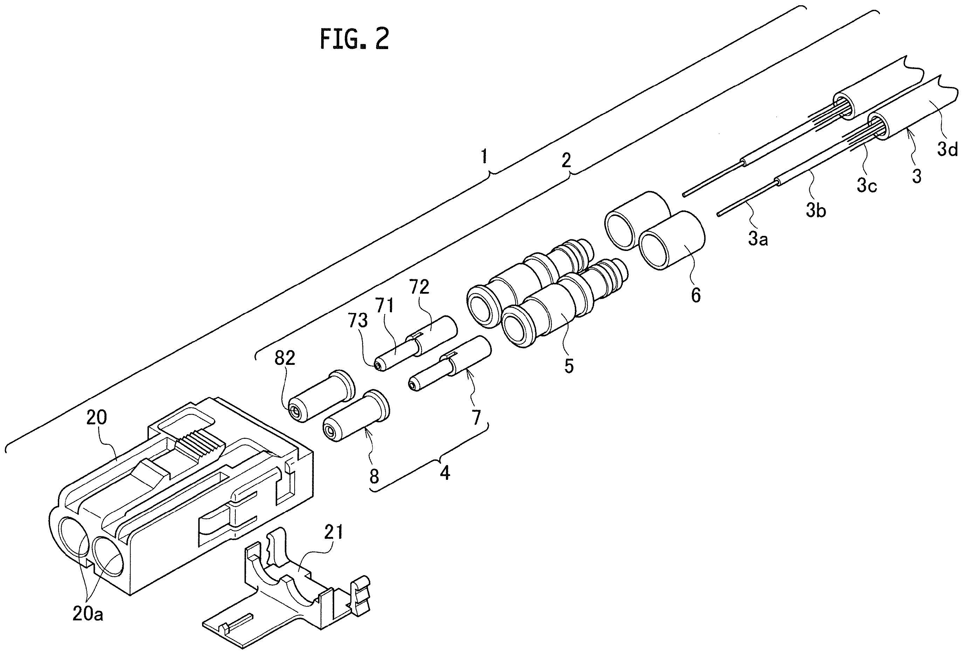

FIGS. 2 to 5 show an embodiment of the present invention. As shown in FIG. 2, an optical connector 1 includes a pair of ferrule assemblies 2, and a connector housing 20 that houses the pair of ferrule assemblies 2.

The respective ferrule assemblies 2 include an optical fiber 3, a ferrule 4 into which a forefront portion of an optical fiber core wire 3a of the optical fiber 3 is inserted, and a caulking sleeve 5 and a caulking ring 6 for fixing an external coating portion 3d and a tensile-strength fiber wire 3c of the optical fiber 3 to the ferrule 4.

The optical fiber 3 is of a hollow type, and includes the optical fiber core wire 3a, an internal coating portion 3b that coats an outer circumference of the optical fiber core wire 3a, a plurality of tensile-strength fiber wires 3c arranged along an outer circumference of the internal coating portion 3b, and the external coating portion 3d that coats the tensile-strength fiber wires 3c. The optical fiber core wire 3a is made of plastic (POF) and includes a core and a clad.

At the forefront side of the optical fiber 3, the external coating portion 3d and the internal coating portion 3b are stripped off, with a stripping size of the internal coating portion 3b being shorter than that of the external coating portion 3d. Accordingly, the forefront side of the optical fiber 3 is exposed in order of the optical fiber core wire 3a, the internal coating portion 3b, and the tensile-strength fiber wire 3c from the forefront toward the other end.

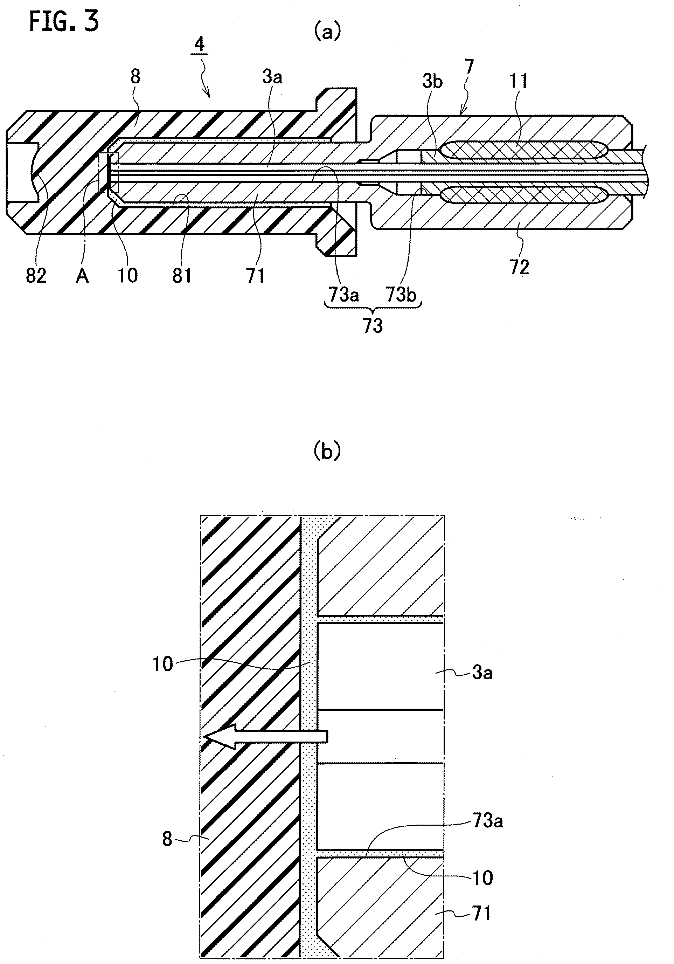

As shown in FIGS. 2 and 3(a), the respective ferrules include an inner ferrule 7 that is an optical-fiber core-wire holding member having a fiber core-wire insertion hole 73, and a lens ferrule 8 that is a lens member having a lens unit 82 on an optical axis of the optical fiber core wire 3a, into which a small-diameter cylindrical portion 71 of the inner ferrule 7 is inserted.

The inner ferrule 7 includes the small-diameter cylindrical portion 71 having a small diameter and a large-diameter cylindrical portion 72 having a large diameter integrally formed with the small-diameter cylindrical portion 71. The fiber core-wire insertion hole 73 is formed at the center of the small-diameter cylindrical portion 71 and the large-diameter cylindrical portion 72. The fiber core-wire insertion hole 73 is formed of a small-diameter hole 73a formed approximately in the small-diameter cylindrical portion 71 and a large-diameter hole 73b formed approximately in the large-diameter cylindrical portion 72. The forefront of the fiber core-wire insertion hole 73 opens in a front end face of the small-diameter cylindrical portion 71. A rear end of the fiber core-wire insertion hole 73 opens in a rear end face of the large-diameter cylindrical portion 72. The forefront portion of the optical fiber 3 is inserted into the fiber core-wire insertion hole 73. Specifically, the exposed optical fiber core wire 3a is inserted into the small-diameter hole 73a, and the optical fiber core wire 3a coated with the internal coating portion 3b is inserted into the large-diameter hole 73b. An adhesive 10 is filled between an inner periphery of the small-diameter hole 73a of the fiber core-wire insertion hole 73 and an outer periphery of the optical fiber core wire 3a. An inner periphery of the large-diameter hole 73b of the fiber core-wire insertion hole 73 and an outer periphery of the internal coating portion 3b that coats the optical fiber core wire 3a are fixed by a laser welding portion 11.

The lens ferrule 8 is a cylindrical member, and is formed with an inner-ferrule insertion hole 81 at a center of the cylindrical member. A bottom face of the inner-ferrule insertion hole 81 is an end face facing the end face of the optical fiber core wire 3a and located on the optical axis of the optical fiber core wire 3a. The lens unit 82 is formed on an external surface opposite to the end face. As shown in FIGS. 3(a) and 3(b), the adhesive 10 is filled between the front end face of the small-diameter cylindrical portion 71 of the inner ferrule 7 and the front end face of the optical fiber core wire 3a and the end face of the lens ferrule 8, and between the outer periphery of the small-diameter cylindrical portion 71 of the inner ferrule 7 and an inner surface of the inner-ferrule insertion hole 81 of the lens ferrule 8. As shown in FIG. 3(b), the adhesive 10 is also filled in a gap between the inner periphery of the fiber core-wire insertion hole 73 and the outer periphery of the optical fiber core wire 3 a.

The adhesive 10 is of an ultraviolet curing type. The adhesive 10 has a refractive index N, which is between a refractive index N1 of the lens ferrule 8 and a refractive index N2 of the optical fiber core wire 3a (N1<N<N2) in a cured state (a hardened state), and has an optical transparency. Preferably, it is desired that the adhesive 10 has a refractive index N of N=√(N1+N2) (N²=(N1+N2)), and has an optical transmittance of 90% or higher.

The connector housing 20 has a pair of ferrule housings 20a arranged in parallel with a gap therebetween. The pair of ferrule assemblies 2 is housed in the pair of ferrule housings 20a. Forward ends of the respective ferrule housings 20a open outward. At the time of being fitted to the other side optical connector (not shown), optical information is transferred via the openings of the respective ferrule housings 20a.

A holder 21 is mounted on the connector housing 20. The pair of ferrule assemblies 2 is positioned by the holder 21 so as not to come off.

An assembling procedure of the ferrule assembly 2 is explained next. The uncured adhesive 10 of an ultraviolet curing type is first applied to at least one of the inner circumference of the fiber core-wire insertion hole 73 of the inner ferrule 7 and the outer circumference of the exposed optical fiber core wire 3a. The optical fiber core wire 3a of the optical fiber 3 is inserted into the fiber core-wire insertion hole 73 of the inner ferrule 7. In this state, the forefront of the optical fiber core wire 3a protrudes beyond at least the forefront of the fiber core-wire insertion hole 73.

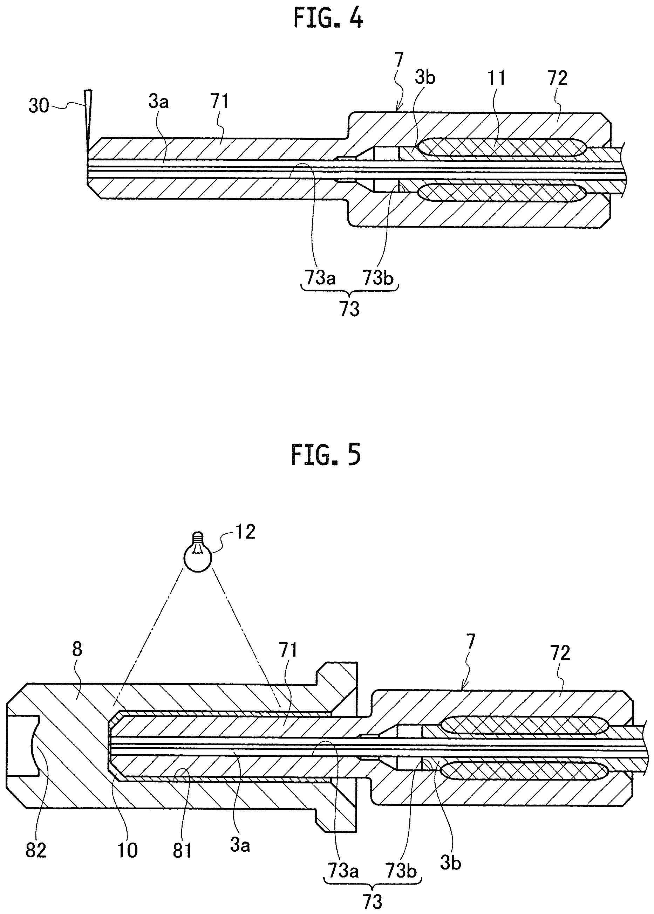

Next, as shown in FIG. 4, laser beams are irradiated to a region of the internal coating portion 3b of the optical fiber 3 housed in the inner ferrule 7 to perform laser welding. Alternatively, the optical fiber 3 can be bonded and fixed by the adhesive 10.

Next, as shown in FIG. 4, end face processing by cutting using a cutting blade 30 and grinding using a grinder (not shown) is performed with respect to the front end face of the inner ferrule 7, from which the optical fiber core wire 3a protrudes. Accordingly, the front end face of the optical fiber core wire 3a and the front end face of the inner ferrule 7 become a flat surface flush with each other and having unevenness as little as possible.

The uncured adhesive of an ultraviolet curing type is then applied to at least one of the outer periphery of the small-diameter cylindrical portion 71 of the inner ferrule 7 and the inner periphery of the inner-ferrule insertion hole 81 of the lens ferrule 8.

Optical beams are then emitted from the optical fiber 3 to change a relative position (inclination and the like) of the inner ferrule 7 and the lens ferrule 8 while measuring a state of the optical beams irradiated via the lens unit 82, thereby determining an appropriate assembly position at which an output of the optical beams becomes largest. That is, the position adjustment is performed by active alignment.

Next, as shown in FIG. 5, ultraviolet rays are irradiated to the inner ferrule 7 and the lens ferrule 8 with positions thereof adjusted appropriately, by using an ultraviolet light source 12 to cure the adhesive 10 of an ultraviolet curing type.

Next, the external coating portion 3d and the tensile-strength fiber wire 3c of the optical fiber 3 are fixed to the ferrule 4 by the caulking sleeve 5 and the caulking ring 6. The procedure is then completed.

As described above, the adhesive 10 having the refractive index N, which is between the refractive index N1 of the lens ferrule 8 and the refractive index N2 of the optical fiber core wire 3a (N1<N<N2), and having the optical transparency is filled between the front end face of the optical fiber core wire 3a and the end face of the lens ferrule 8 opposite thereto. Accordingly, a scattering loss due to surface roughness of the respective end faces of the optical fiber core wire 3a and the lens ferrule 8 can be reduced, and a Fresnel loss (Fresnel reflection loss) can be reduced as compared with a case in which air is present between the end face of the optical fiber core wire 3a and the end face of the lens ferrule 8. That is, because the adhesive 10 that fixes between the inner ferrule 7 and the lens ferrule 8 works as a substitute of the optical coupling-loss reducing unit, the optical coupling-loss reducing unit need not be installed separately as in the conventional example. Further, the adhesive 10 is cheaper than the refractive-index matching plate. Accordingly, the optical coupling loss between the end face of the optical fiber core wire 3a and the lens ferrule 8 can be reduced, the installation work can be simplified, and cost reduction can be achieved.

When the adhesive 10 having the refractive index N of N=√(N1+N2) and an optical transmittance of 90% or higher is used, the Fresnel loss described above can be sufficiently reduced, and almost all optical beams penetrate therethrough. Accordingly, the optical coupling loss can be reduced reliably and sufficiently. However, for example, when the refractive index N2 of the optical fiber core wire 3a is 1.52, and the refractive index N1 of the lens ferrule 8 is 1.48, the refractive index N of the adhesive 10 could also be set to 1.5.

The adhesive 10 is also filled in the gap between the inner periphery of the fiber core-wire insertion hole 73 and the outer periphery of the optical fiber core wire 3a. Accordingly, misalignment due to the gap between the inner periphery of the fiber core-wire insertion hole 73 and the outer periphery of the optical fiber core wire 3a, for example, misalignment due to vibration can be prevented. Accordingly, a loss of optical communication due to misalignment of the optical fiber core wire 3a with respect to the inner ferrule 7 can be suppressed.

While the optical fiber core wire 3a is made of plastic in the above embodiment, the optical fiber core wire 3a can be made of glass. For example, when the lens ferrule 8 is made of a cyclic olefin copolymer (COC), and the optical fiber core wire 3a is made of glass, the refractive index N1 of the lens ferrule 8 is 1.53, and the refractive index N2 of the optical fiber core wire 3a is 1.48. In this case, it is preferable that the refractive index N of the cured adhesive 10 is 1.50.

The adhesive 10 is of an ultraviolet curing type. However, the adhesive 10 can be any adhesive that can be cured by adding energy to the adhesive in a molten state. For example, the adhesive 10 can be of a thermosetting type.

The Japanese Patent Application P2013-146193 (filed on July 12, 2013) is the priority application for the present application.

Although the invention has been described above by reference to certain embodiments of the invention, the invention is not limited to the embodiments described above. Modifications and variations of the embodiments described above will occur to those skilled in the art, in light of the above teachings. The scope of the invention is defined by the following claims.

## Claims

1. An optical connector (1), comprising:
an optical-fiber core-wire holding member (7) having a fiber core-wire insertion hole (73), into which an optical fiber core wire (3a) of an optical fiber (3) is inserted, with a front end face of the optical fiber core wire (3a) inserted into the fiber core-wire insertion hole (73) so as to be exposed; and
a lens member (8) having a lens unit (82) arranged on an axis of the optical fiber core wire (3a) and made of a light transmitting material,
wherein an adhesive (10) having a refractive index N, which is between a refractive index N1 of the lens member (8) and a refractive index N2 of the optical fiber core wire (3a), and having optical transparency is filled between the front end face of the optical fiber core wire (3a) and an end face of the lens member (8) opposite to the front end face of the optical fiber core wire (3a),
wherein the optical-fiber core-wire holding member (7) includes a cylindrical portion (71) having a small outer diameter and a cylindrical portion (72) having a large outer diameter, the large-diameter cylindrical portion (72) being integrally formed with the small-diameter cylindrical portion (71),
the fiber core-wire insertion hole (73) is formed at the center of the small-diameter cylindrical portion (71) and the large-diameter cylindrical portion (72),
the fiber core-wire insertion hole (73) is formed of a small-diameter hole (73a) formed in the small-diameter cylindrical portion (71) and a large-diameter hole (73b) formed in the large-diameter cylindrical portion (72),
the exposed optical fiber core wire (3a) is inserted into the small-diameter hole (73a), wherein the adhesive (10) is also filled between an inner periphery of the small-diameter hole (73a) and an outer periphery of the exposed optical fiber core wire (3a),
the optical fiber core wire (3a) coated with an internal coating portion (3b) is inserted into the large-diameter hole (73b), wherein an inner periphery of the large-diameter hole (73b) and an outer periphery of the internal coating portion (3b) are fixed by a laser welding portion (11), and
the adhesive (10) is also filled between an outer periphery of the small-diameter cylindrical portion (71) of the optical-fiber core-wire holding member (7) and an inner surface of an inner-ferrule insertion hole (81) of the lens member (8).

2. The optical connector according to claim 1, wherein the adhesive (10) has a refractive index N of N=√(N1+N2) and has an optical transmittance of 90% or higher in a cured state.

3. The optical connector according to claim 1, wherein
the optical-fiber core-wire holding member (7) is an inner ferrule having the fiber core-wire insertion hole (73)

## Patentansprüche

1. Optischer Steckverbinder (1), der Folgendes umfasst:
ein Lichtleitfaserkerndraht-Halteelement (7), das ein Faserkerndraht-Einfügeloch (73) aufweist, in das ein Lichtleitfaserkerndraht (3a) einer Lichtleitfaser (3) eingefügt ist, mit einer Frontendfläche des Lichtleitfaserkerndrahts (3a) in das Faserkerndraht-Einfügeloch (73) derart eingefügt, dass er freigelegt ist; und
ein Linsenelement (8), das eine Linseneinheit (82) aufweist, die auf einer Achse des Lichtleitfaserkerndrahts (3a) eingerichtet ist und aus einem Licht übertragenden Material hergestellt ist,
wobei ein Klebstoff (10), der einen Brechungsindex N aufweist, der zwischen einem Brechungsindex N1 des Linsenelements (8) und einem Brechungsindex N2 des Lichtleitfaserkerndrahts (3a) liegt, und eine optische Transparenz aufweist, zwischen der Frontendfläche des Lichtleitfaserkerndrahts (3a) und einer Endfläche des Linsenelements (8), dem Frontendfläche des Lichtleitfaserkerndrahts (3a) entgegengesetzt, eingefüllt ist,
wobei das Lichtleitfaserkerndraht-Halteelement (7) einen zylindrischen Abschnitt (71) beinhaltet, der einen kleinen Außendurchmesser aufweist, und einen zylindrischen Abschnitt (72), der einen großen Außendurchmesser aufweist, wobei der zylindrische Abschnitt (72) mit großem Durchmesser integral mit dem zylindrischen Abschnitt (71) mit kleinem Durchmesser gebildet ist,
wobei das Faserkerndraht-Einfügeloch (73) an der Mitte des zylindrischen Abschnitts (71) mit kleinem Durchmesser und des zylindrischen Abschnitts (72) mit großem Durchmesser gebildet ist,
wobei das Faserkerndraht-Einfügeloch (73) aus einem Loch (73a) mit kleinem Durchmesser, das in dem zylindrischen Abschnitt mit kleinem Durchmesser (71) gebildet ist, und einem Loch mit großem Durchmesser (73b), das in dem zylindrischen Abschnitt (72) mit großem Durchmesser gebildet ist, gebildet ist,
wobei der freigelegte Lichtleitfaserkerndraht (3a) in das Loch mit kleinem Durchmesser (73a) eingefügt ist, wobei der Klebstoff (10) auch zwischen einen Innenumfang des Lochs mit kleinem Durchmesser (73a) und einen Außenumfang des freigelegten Lichtleitfaserkerndrahts (3a) gefüllt ist,
wobei der Lichtleitfaserkerndraht (3a), der mit einem Innenbeschichtungsabschnitt (3b) beschichtet ist, in das Loch mit großem Durchmesser (73b) eingefügt ist, wobei ein Innenumfang des Lochs mit großem Durchmesser (73b) und ein Außenumfang des Innenbeschichtungsabschnitt (3b) durch einen Laserschweißabschnitt (11) befestigt sind, und
der Klebstoff (10) auch zwischen einen Außenumfang des zylindrischen Abschnitts mit kleinem Durchmesser (71) des Lichtleitfaserkerndraht-Halteelements (7) und einer Innenoberfläche eines Innenhülsen-Einfügelochs (81) des Linsenelements (8) gefüllt ist.

2. Optischer Steckverbinder nach Anspruch 1, wobei der Klebstoff (10) einen Brechungsindex N von N=√(N1+N2) aufweist und in einem ausgehärteten Zustand einen optischen Durchlassgrad von 90% oder höher aufweist.

3. Optischer Steckverbinder nach Anspruch 1, wobei das Lichtleitfaserkerndraht-Halteelement (7) eine Innenhülse ist, die das Faserkerndraht-Einfügeloch (73) aufweist.

## Revendications

1. Connecteur optique (1), comprenant :
un élément de maintien de fil central de fibre optique (7) présentant un trou d'insertion de fil central de fibre (73), dans lequel un fil central de fibre optique (3a) d'une fibre optique (3) est inséré, avec une face d'extrémité avant du fil central de fibre optique (3a) insérée dans le trou d'insertion de fil central de fibre (73) de manière à être exposé ; et
un élément de lentille (8) présentant une unité de lentille (82) agencée sur un axe du fil central de fibre optique (3a) et faite d'un matériau électroluminescent,
dans lequel un adhésif (10) présentant un indice de réfraction N, qui est entre un indice de réfraction N1 de l'élément de lentille (8) et un indice de réfraction N2 du fil central de fibre optique (3a), et présentant une transparence optique est rempli entre la face d'extrémité avant du fil central de fibre optique (3a) et une face d'extrémité de l'élément de lentille (8) opposée à la face d'extrémité avant du fil central de fibre optique (3a),
dans lequel
l'élément de maintien de fil central de fibre optique (7) inclut une partie cylindrique (71) présentant un petit diamètre extérieur et une partie cylindrique (72) présentant un grand diamètre extérieur, la partie cylindrique de grand diamètre (72) étant intégralement formée avec la partie cylindrique de petit diamètre (71),
le trou d'insertion de fil central de fibre (73) est formé au centre de la partie cylindrique de petit diamètre (71) et de la partie cylindrique de grand diamètre (72),
le trou d'insertion de fil central de fibre (73) est formé d'un trou de petit diamètre (73a) formé dans la partie cylindrique de petit diamètre (71) et d'un trou de grand diamètre (73b) formé dans la partie cylindrique de grand diamètre (72),
le fil central de fibre optique exposé (3a) est inséré dans le trou de petit diamètre (73a), dans lequel l'adhésif (10) est également rempli entre une périphérie intérieure du trou de petit diamètre (73a) et une périphérie extérieure du fil central de fibre optique exposé (3a),
le fil central de fibre optique (3a) revêtu d'une partie de revêtement interne (3b) est inséré dans le trou de grand diamètre (73b), dans lequel une périphérie intérieure du trou de grand diamètre (73b) et une périphérie extérieure de la partie de revêtement interne (3b) sont fixées par une partie de soudage au laser (11), et
l'adhésif (10) est également rempli entre une périphérie extérieure de la partie cylindrique de petit diamètre (71) de l'élément de maintien de fil central de fibre optique (7) et une surface intérieure d'un trou d'insertion de virole intérieure (81) de l'élément de lentille (8).

2. Connecteur optique selon la revendication 1, dans lequel l'adhésif (10) présente un indice de réfraction N de N = √(N1 + N2) et présente une transmittance optique de 90 % ou supérieure dans un état durci.

3. Connecteur optique selon la revendication 1, dans lequel
l'élément de maintien de fil central de fibre optique (7) est une virole intérieure présentant le trou d'insertion de fil central de fibre (73).
